# FASCICULE DE BREVET EUROPEEN

(11) **EP 1 305 610 B1**
(45) Date de publication et mention de la délivrance du brevet: **24.10.2007**
(21) Numéro de dépôt: 01956606.6
(22) Date de dépôt: 18.07.2001
(51) Int. Cl.: G01N 27/12

(54) **PROCEDE D'ELABORATION DE L'ELEMENT SENSIBLE D'UN CAPTEUR DE MOLECULES GAZEUSES REDUCTRICES**
VERFAHREN ZUR HERSTELLUNG DES SENSORELEMENTES EINES SENSORS FÜR REDUZIERENDE GASMOLEKÜLE
METHOD OF PREPARING THE SENSING ELEMENT OF A REDUCING GAS MOLECULE SENSOR

(30) Priorité: 01.08.2000 FR 0010147
(43) Date de publication de la demande: 02.05.2003
(73) Titulaire: CENTRE NATIONAL DE LA RECHERCHE SCIENTIFIQUE, 75016 Paris Cédex (FR)
(72) Inventeur: FLEURY, Vincent, F-75014 Paris (FR); DEVERS, Thierry, F-28000 Chartres (FR); ALLAM, Lévi, F-28000 Chartres (FR)
(74) Mandataire: Sueur, Yvette
(86) Numéro de dépôt international: PCT/FR2001/002343
(87) Numéro de publication internationale: WO 2002/010730

(56) Documents cités:
- EP-A- 0 297 732
- WO-A-95/00837
- GB-A- 2 321 336
- JP-A- 7 103 925
- US-A- 2 407 579
- BAKIN A S ET AL: "SnO2 based gas sensitive sensor" THIN SOLID FILMS,CH,ELSEVIER-SEQUOIA S.A. LAUSANNE, vol. 296, no. 1-2, 1 mars 1997 (1997-03-01), pages 168-171, XP004080981 ISSN: 0040-6090

## Description

L'invention concerne un procédé pour l'élaboration de l'élément sensible d'un capteur, de molécules gazeuses réductrice, l'élément sensible étant en oxyde d'étain.

La détection et la mesure de la concentration en molécules nocives d'une atmosphère constituent un enjeu très important, notamment en raison de l'accroissement des émissions d'origine industrielle ou urbaine. Il est devenu nécessaire de détecter la présence de molécules nocives à des concentrations de plus en plus faibles, inférieures aux concentrations dangereuses pour l'homme. Le cas de l'oxyde de carbone CO que l'on trouve notamment dans les gaz d'échappement et dans la fumée des cigarettes est exemplaire, ce gaz étant mortel à des concentrations extrêmement faibles, de l'ordre de 1 ppm. En outre, ces mêmes molécules doivent être détectées dans certains dispositifs industriels ou technologiques tels que les piles à combustible, où des concentrations très faibles provoquent par exemple l'empoisonnement de catalyseurs. Le seuil de sensibilité et la vitesse de détection sont les deux paramètres importants d'un capteur de ce type.

Il est connu d'utiliser des capteurs à l'oxyde d'étain pour détecter les molécules gazeuses réductrices. La conductivité de l'oxyde d'étain, qui est un semi-conducteur intrinsèque, varie en fonction de la teneur en molécules réductrices de l'atmosphère. Il est admis que, en atmosphère non réductrice, de l'oxygène s'adsorbe aux joints de grains et refoule partiellement les états électroniques des joints de grains, rendant le matériau très résistif. En présence de molécules réductrices, la concentration en oxygène des joints de grains diminue, libérant ainsi les états électroniques au voisinage de la surface des grains, de part et d'autre de la surface de contact proprement dite. L'existence de ces états électroniques permet la conduction d'électrons à travers les joints de grains. Il apparaît ainsi que la sensibilité des capteurs ayant de l'oxyde d'étain comme élément sensible augmente lorsque la taille des grains de l'oxyde diminue, c'est-à-dire lorsque la surface spécifique augmente et lorsque l'effet quantique de refoulement des états électroniques vers l'intérieur du grain est plus efficace. Toutefois, une diminution de la taille des.grains provoque en général une diminution de la connectivité physique entre les grains au détriment de la conductivité.

De tels capteurs dont l'élément sensible est de l'oxyde d'étain sont décrits notamment dans le numéro spécial « Gas-sensing Materials » de « Materials Research Society Bulletin », publié en Juin 1998. Ils comprennent une couche d'oxyde d'étain polycristallin sur un support. Dans les dispositifs commercialisés, la taille des grains de l'oxyde d'étain est en général de l'ordre de 1 µm. On connaît également des capteurs contenant de l'oxyde d'étain polycristallin comme matière active sous forme de grains ayant une dimension inférieure à 20 nm. Il s'agit essentiellement de dispositifs de laboratoire, élaborés en préparant l'oxyde à partir d'un métal obtenu par pulvérisation cathodique par ablation laser, par des procédés sol-gel, par précipitation ou par d'autres procédés de synthèse chimique. Lorsque l'oxyde est obtenu par un procédé sol-gel ou par une simple précipitation, il contient un solvant qu'il faut éliminer. Dans la plupart des cas, l'oxyde obtenu se présente sous forme d'une poudre de grains séparés, qu'il faut ensuite fritter et recuire pour qu'elle soit utilisable pour un capteur, et la connectivité physique des grains n'est pas garantie. En outre, le frittage aboutit à un matériau tridimensionnel sous forme de pastilles qui contiennent un nombre élevé de grains dans l'épaisseur. Le temps de réponse d'un capteur contenant un tel oxyde sera d'autant plus long que les pastilles seront plus épaisses, en raison du temps de diffusion des molécules gazeuses à détecter vers le coeur de la matière active du capteur. Un autre inconvénient du frittage réside dans le fait qu'il ne permet pas de mettre en forme le capteur. Une mise en forme des poudres peut être effectuée par des procédés consistant à incorporer les grains dans une encre, puis à tracer le capteur selon les techniques utilisées dans les imprimantes à jet d'encre. Cette technique donne toutefois des films dans lesquels les grains ne sont pas connectés à une échelle macroscopique par rapport à leur taille et elle introduit des solvants dans les grains.

D'après le document WO-A-9500837, il est connu de fabriquer un capteur d'un gaz réducteur, à savoir l'hydrogène, par voie électrochimique.

Le but de la présente invention est de fournir un procédé d'élaboration de l'élément sensible d'un capteur de molécules réductrices comprenant une couche d'oxyde d'étain constituée de grains très fins ayant une très bonne cohésion physique. C'est pourquoi la présente invention a pour objet un procédé d'élaboration de l'élément sensible d'un tel capteur, ainsi que le capteur obtenu.

Le procédé selon l'invention pour l'élaboration de l'élément sensible d'un capteur de molécules gazeuses réductrices est caractérisé en ce que :
- au cours d'une première étape, on dépose par voie électrochimique sur la surface d'un support isolant une couche d'étain ayant une épaisseur inférieure à 1 µm, de préférence inférieure à 400 nm, en plaçant ledit support isolant dans une cellule électrochimique qui comprend une anode constituée par de l'étain et une cathode qui est un film conducteur appliqué sur la surface du support isolant à l'une de ses extrémités, les deux électrodes étant séparées par un électrolyte constitué par une solution de sel d'étain, et en faisant passer un courant d'intensité constante dans ladite cellule ;
- au cours d'une deuxième étape, on soumet la couche d'étain obtenue à une oxydation.

L'intensité du courant est telle qu'elle crée une densité de courant comprise entre 1 µA/cm² et 5 mA/cm² dans le plan perpendiculaire aux électrodes et passant par le front de croissance du film qui se dépose.

La concentration du sel d'étain dans l'électrolyte est comprise de préférence entre 10⁻³ mole/l et 10⁻¹ mole/l.

Dans un mode de réalisation, le support isolant sur lequel la couche doit être déposée constitue l'une des parois de la cellule électrochimique. Une plaque isolante sensiblement de mêmes dimensions que ledit support isolant est parallèle audit support et sert simplement à fermer la cellule, afin de la protéger de l'air. L'écartement entre le support et la plaque isolante délimite le volume d'électrolyte. Le support et la plaque peuvent être maintenus écartés par les contacts métalliques qui permettent la circulation du courant entre l'anode d'étain montée à l'intérieur de la cellule et la cathode constituée par un film conducteur déposé sur la face du support orientée vers l'intérieur de la cellule à l'une des extrémités de ladite face. La cathode peut être un film mince d'or ou d'un autre métal. Par exemple, si le métal formant la cathode est l'or, un film d'environ 1000 Å est approprié. Pour mettre en contact la cathode constituée par un film d'or avec le galvanostat qui fournit l'intensité de courant requise, on peut utiliser des lames ou des fils de métal. Dans une cellule plate telle que définie ci-dessus, l'épaisseur e de la couche d'étain obtenue est déterminée simplement par la formule e = P x h x C/C_{M} dans laquelle h représente la distance entre les deux plaques, c'est-à-dire la hauteur de l'électrolyte, C est la concentration en cations de l'électrolyte et C_{M} est la concentration molaire de l'étain, c'est-à-dire le nombre de moles par litre d'étain à l'état solide. P est un paramètre lié à la mobilité du cation et de l'anion du sel suivant la formule P = 1 + (µ_{c}/µₐ), µ_{c} et µₐ étant respectivement la mobilité du cation et de l'anion. En règle générale, les cations et les anions d'un sel ont une mobilité très proches, et P est voisin de 2. La formule simplifiée pour la détermination de e peut donc s'écrire : e = 2h x C/C_{M}.

Au début de l'étape d'électrolyse, la cathode sert d'amorce à la formation de l'étain qui s'effectue sous forme de couche sur le support. La couche d'étain qui se dépose ensuite reste adhérente au support.

L'électrolyte peut être une solution aqueuse ou non aqueuse d'un sel d'étain. Les solutions aqueuses sont préférées. Le sel d'étain est de préférence le chlorure ou le sulfate d'étain. La concentration de sel dans l'électrolyte peut varier dans une très large mesure, suivant la qualité et la compacité du film que l'on souhaite obtenir. Une concentration entre 0,005 et 0,05 mole/l, plus spécialement entre 0,02 et 0,04 mole/l est particulièrement préférée. On utilise de préférence une solution de sel d'étain conservée à l'abri de l'air, afin d'éviter la présence d'hydroxydes et de carbonates.

Du fait que l'on opère à courant constant, la vitesse de croissance de la couche d'étain est proportionnelle à l'intensité du courant, c'est-à-dire au flux d'atomes.

Lorsque l'on souhaite obtenir une couche d'étain homogène, on impose à la cellule électrochimique un courant ayant une intensité telle qu'elle crée une densité de courant comprise entre 0,05 et 5 mA/cm² dans le plan perpendiculaire aux électrodes et passant par le front de croissance de la couche qui se dépose. Dans ce cas, lorsque l'électrolyte est une solution de chlorure d'étain préparée à partir d'une poudre de chlorure d'étain du commerce, on obtient des couches constituées de grains ayant une dimension moyenne de l'ordre de 300 nm. Lorsque l'on utilise un électrolyte obtenu en diluant à 0,01 mole/l, juste avant l'utilisation, une solution commerciale de chlorure d'étain très concentrée et fortement acide, (par exemple des solutions commercialisées pour la sensibilisation des surfaces avant argenture dans les procédés dit Electroless) la couche qui se dépose sur le support est constituée de pastilles en forme de disque ayant une épaisseur d'environ 5 nm et une circonférence d'environ 50 nm lorsque la densité de courant dans la cellule électrochimique est inférieure à 1 mA/cm², cette structure étant déterminée par AFM (microscopie à force atomique). La sensibilité aux atmosphères réductrices étant liée à des phénomènes d'écrantage entre les molécules adsorbées et le matériau actif du capteur, c'est la plus petite dimension des grains qui oriente les propriétés du capteur. Dans le cas présent, les performances sont donc particulièrement bonnes.

En règle générale, lorsque l'on souhaite obtenir une couche dendritique, on impose à la cellule électrochimique une intensité de courant comprise entre 1 et 100 µA, de préférence entre 5 et 50 µA. Aux intensités inférieures à environ 1 µA, il se forme des macrocristaux qui sont peu intéressants pour les capteurs. Aux intensités supérieures à 100 µA, le métal ne se dépose plus sous forme de couche sur le support, mais il se forme dans le liquide. Il peut aussi se produire une électrolyse de l'eau au lieu d'un dépôt métallique. Lorsque l'électrolyte est une solution de sel d'étain fortement acide, il est nécessaire d'imposer une densité de courant supérieure à 20 µA pour obtenir une couche dendritique. Dans un mode de réalisation particulier, on utilise comme support pour le dépôt d'une couche dendritique d'étain, un support sur l'une des faces duquel on a gravé des micro-rayures. Dans ce cas, les dendrites de la couche qui se forme lors de l'électrolyse suivent le tracé des micro-rayures. On obtient ainsi un micro-fil polycristallin dont l'épaisseur et la section ne contiennent qu'un très faible nombre de grains, voire un grain unique en épaisseur. Ces grains ont une dimension inférieure ou égale à 1 µm, généralement de l'ordre de 100 à 300 nm.

L'oxydation de la couche d'étain déposée sur le support peut être effectuée par oxydation à l'air. Il est avantageux d'effectuer un traitement thermique simultané, pour accélérer l'oxydation et l'adsorption d'oxygène aux joints de grains. L'oxydation et l'adsorption d'oxygène se traduisent par une augmentation significative de la résistance de la couche jusqu'à un pallier qui dépend de l'épaisseur de la couche. Lorsque la couche est ensuite soumise une atmosphère réductrice, on observe une baisse significative de la résistivité en quelques secondes à la température ambiante. Lorsque la couche est remise en atmosphère normale, la résistance retrouve sa valeur initiale en quelques dizaines de secondes à la température ambiante.

L'oxydation de la couche d'étain obtenue lors de la première étape du procédé peut être effectuée après avoir construit le capteur. Dans ce cas, lorsque la couche d'étain a atteint la longueur souhaitée sur le support au cours de la première étape, on ouvre la cellule électrochimique, par exemple en retirant la plaque isolante ayant servi à fermer la cellule sur sa partie supérieure. La couche reste bien adhérente au support isolant sur lequel elle s'est déposée. Après avoir éliminé l'électrolyte, on colle deux fils d'argent ayant quelques dixièmes de millimètre de diamètre sur la couche d'étain à ses extrémités, lesdits fils d'argent étant destinés à servir d'électrodes pour le capteur. L'ensemble constitué par le support isolant portant la couche d'étain munie des fils d'argent est ensuite soumis à une atmosphère oxydante, par exemple l'atmosphère ambiante, éventuellement avec un traitement thermique.

Le procédé d'élaboration de la couche d'oxyde d'étain est particulièrement avantageux dans la mesure où il produit de l'oxyde d'étain très pur et sous forme de couche très finedirectement sur le support qui fera partie du capteur. En outre, il permet de travailler à température ambiante, en milieu liquide, sans mise en oeuvre de techniques délicates. Par le contrôle de l'intensité du courant appliqué lors de l'électrolyse, on peut orienter l'épaisseur et la morphologie de la couche déposée (couche homogène ou couche dendritique). En outre, le fait que le courant circule dans les grains pendant le dépôt de l'étain sous forme de métal garantit que les grains d'oxyde d'étain obtenus après oxydation de la couche d'étain seront physiquement connectés. De manière surprenante, l'oxydation de la couche d'étain ne provoque pas de déconnexion des grains dans une mesure qui aurait pu modifier les propriétés de conductivité de la couche d'oxyde utilisée comme élément sensible d'un capteur.

Dans les procédés de l'art antérieur pour la préparation d'oxyde d'étain, il nécessaire d'appliquer des traitements particuliers, par exemples des frittages, ou des traitements thermiques sévères tels que des calcinations, pour obtenir un matériau conducteur. Enfin, du fait que l'élément sensible du capteur de la présente invention est élaboré en milieu liquide, il est parfaitement apte à fonctionner dans un tel milieu.

Selon la présente invention, un élément sensible de capteur de molécules réductrices gazeuses est constitué par un support isolant revêtu d'une couche d'oxyde d'étain et il est caractérisé en ce que la couche d'oxyde d'étain est polycristalline et a une épaisseur inférieure à 1 µm, de préférence inférieure à 400 nm.

Dans un mode de réalisation particulier, la couche d'oxyde d'étain est substantiellement monograin dans l'épaisseur, c'est-à-dire la taille des grains est sensiblement équivalente à l'épaisseur de la couche d'oxyde.

Un capteur de molécules gazeuses réductrices peut être constitué par un élément sensible selon l'invention relié à deux électrodes, un contrôleur et un ohm-mêtre ou un pont d'impédance.

Dans un mode de réalisation particulier, la couche d'oxyde d'étain est une couche homogène.

Dans un autre mode de réalisation, la couche d'oxyde d'étain a une morphologie dendritique. Les joints de grains sont très accessibles à l'atmosphère. En outre, la structure en arbre des grains est assimilable à une structure en fil. La présence de petits grains sur le trajet du courant, le long de ce fil, suffit à rendre le capteur performant. L'on constate également que certains grains présentent des tailles de guêpe qui, sans constituer de véritables joints de grains, restent des lieux privilégiés pour la détection du changement de conductivité lié à la présence de molécules réductrices. La structure en fil peut être accentuée en utilisant un support dans lequel des micro-rayures ont été gravées. Cette technique est aisée et permet d'obtenir des alignements de grains de forme quelconque, car le dépôt des grains se fait le long de la rayure qui peut avoir une forme rectiligne ou une forme quelconque.

La présente invention est décrite plus en détail par référence aux exemples donnés ci-après.

### Exemple 1

### Préparation d'une couche d'oxyde

Pour la première étape du procédé, à savoir pour la préparation du film d'étain, on a utilisé une cellule électrochimique constituée par une lame de microscope (servant de support pour le dépôt) et une lamelle de microscope ayant toutes deux 1,8 cm de côté, maintenues espacées de 0,1 mm par deux feuilles rectangulaires découpées dans une feuille d'étain métallique (commercialisée par la société Goodfellow), l'une des feuilles assurant la connexion entre le générateur et la cathode, l'autre feuille assurant la connexion entre le générateur et l'anode. L'électrolyte était une solution aqueuse acide à 0,1 mole/l de chlorure d'étain. La cathode était constituée par un film d'or de 1000 Å d'épaisseur, appliqué par évaporation à l'une des extrémités de la face interne de la lame servant de support, le reste de cette face interne ayant été au préalable sensibilisé par évaporation d'une couche d'or ayant une épaisseur de 20 Å, non conductrice de courant. L'intensité du courant I fournie par le galvanostat était de 30 µA.

Les mesures effectuées ont montré que les tailles de grains sont typiquement comprises entre 200 et 600 nm.

La couche d'étain a ensuite été oxydée par chauffage à 100°C pendant 4 heures dans une enceinte dans laquelle on a fait circuler de l'air.

### Exemple 2

### Essais de détection

Un capteur comprenant comme élément sensible une couche dendritique ayant des grains de l'ordre de 400 nm a été utilisé pour détecter l'oxyde de carbone contenu dans la fumée de cigarette. Les contacts entre le support constitué par la lame de microscope revêtu de la couche d'oxyde d'étain, et un ohm-mêtre ont été réalisés à l'aide de laque d'argent déposée sur la couche et de fils d'argent.

Une fumée de cigarette a été aspirée dans une enceinte en verre ayant une contenance de 0,5 1, maintenue close. Lorsque la température de la fumée a atteint la température ambiante, on a ménagé une ouverture dans l'enceinte, d'environ 5 cm de diamètre et on a aussitôt approché le capteur à quelques cm de l'ouverture, puis on l'a éloigné. Les opérations de rapprochement et d'éloignement ont été répétées plusieurs fois, la résistivité du capteur étant mesurée en continu.

On a constaté un temps de réponse de 2,5 secondes, lorsque le capteur est mis en contact avec la fumée alors que les capteurs à l'oxyde d'étain de l'art antérieur, dit capteurs Taguchi, ont un temps de réponse de l'ordre de 10 secondes à 1 min suivant les types. Lorsque le capteur de l'invention est éloigné de la fumée, il retrouve sa résistivité nominale en 30 secondes.

Des mesures comparatives ont été effectuées avec un capteur analogue, ne comportant pas de film d'oxyde d'étain, l'élément sensible étant constitué de la plaque de microscope portant la laque d'argent et relié à l'ohm-mêtre par des fils d'argent. Aucune modification de la résistivité n'a été constatée lors de la mise en contact avec la fumée de ce capteur comparatif.

## Revendications

1. Procédé pour l'élaboration de l'élément sensible d'un capteur de molécules gazeuses réductrice par voie électrochimique, **caractérisé en ce que** :
- au cours d'une première étape, on dépose sur la surface d'un support isolant une couche d'étain ayant une épaisseur inférieure à 1 µm, en plaçant ledit support isolant dans une cellule électrochimique qui comprend une anode constituée par de l'étain et une cathode qui est un film conducteur appliqué sur la surface du support isolant à l'une de ses extrémités, les deux électrodes étant séparées par un électrolyte constitué par une solution de sel d'étain, et en faisant passer un courant d'intensité constante dans ladite cellule ;
- au cours d'une deuxième étape, on soumet la couche d'étain obtenue à une oxydation.

2. Procédé selon la revendication 1, **caractérisé en ce que** l'on applique une intensité de courant telle qu'elle crée une densité de courant comprise entre 1 µA/cm² et 5 mA/cm² dans le plan perpendiculaire aux électrodes et passant par le front de croissance de la couche qui se dépose.

3. Procédé selon la revendication 2, **caractérisé en ce que** la densité de courant est comprise entre 0,05 mA/cm² et 5 mA/cm² .

4. Procédé selon la revendication 3, **caractérisé en ce que** la densité de courant est inférieure à 1 mA/cm².

5. Procédé selon la revendication 1, **caractérisé en ce que** la concentration du sel d'étain dans l'électrolyte est comprise entre 10⁻³ mole/l et 10⁻¹ mole/l.

6. Procédé selon la revendication 5, **caractérisé en ce que** la concentration du sel d'étain dans l'électrolyte est comprise entre 0,005 mole/l et 0,05 mole/l.

7. Procédé selon la revendication 3, pour l'élaboration d'une couche d'oxyde d'étain constituée par des grains ayant une dimension moyenne de l'ordre de 300 nm, **caractérisé en ce que** l'électrolyte est une solution de chlorure d'étain préparée à partir d'une poudre de chlorure d'étain.

8. Procédé selon la revendication 4, pour l'élaboration d'une couche d'oxyde d'étain constituée par des pastilles en forme de disque ayant une épaisseur d'environ 5 nm et une circonférence d'environ 50 nm, **caractérisé en ce que** l'électrolyte est une solution de chlorure d'étain à 0,01 mol/l, obtenu en diluant une solution fortement acide.

9. Procédé selon la revendication 1, **caractérisé en ce que** :
- le support isolant sur lequel la couche doit être déposé constitue l'une des parois de la cellule électrochimique ;
- une plaque isolante sensiblement de mêmes dimensions que ledit support isolant est parallèle audit support et sert à fermer la cellule, l'écartement entre le support et la plaque isolante délimitant le volume d'électrolyte ;
- le support et la plaque sont maintenus écartés par des contacts métalliques qui permettent la circulation du courant entre l'anode d'étain montée à l'intérieur de la cellule et la cathode constituée par un film conducteur déposé sur la face du support orientée vers l'intérieur de la cellule et à l'une des extrémités de ladite face.

10. Procédé selon la revendication 1, **caractérisé en ce que** la cathode est un film mince d'or ayant une épaisseur d'environ 1000 Å.

11. Procédé selon la revendication 2, **caractérisé en ce que** l'on utilise un support isolant dont l'une des faces comprend des micro-rayures, pour l'élaboration d'une couche d'oxyde d'étain sous forme de micro-fils polycristallins.

## Claims

1. A process for electrochemically producing the sensitive element of a sensor for reducing molecules,
**characterized in that** :
- during a first step, a layer of tin having a thickness of less than 1 µm is deposited on the surface of an insulating support, by placing said insulating support in an electrochemical cell comprising an anode made of tin and a cathode which is a conductive film applied to the surface of the insulating support at one end thereof, the two electrodes being separated by an electrolyte consisting of a solution of a tin salt, and by passing a current of constant intensity through said cell :
- during a second step, the tin layer obtained undergoes oxidation.

2. The process as claimed in claim 1, **characterized in that** a current density is applied such that it creates a current density of between 1 µA/cm² and 5 mA/cm² in the plane perpendicular to the electrodes and passing through the growth front of the layer which is being deposited.

3. The process as claimed in claim 2, **characterized in that** the current density is between 0.05 mA/cm² and 5 mA/cm².

4. The process as claimed in claim 3, **characterized in that** the current density is less than 1 µA/cm².

5. The process as claimed in claim 1, **characterized in that** the concentration of tin salt in the electrolyte is between 10⁻³ mol/l and 10⁻¹ mol/l.

6. The process as claimed in claim 5, **characterized in that** the concentration of tin salt in the electrolyte is between 0.005 mol/l and 0.05 mol/l.

7. The process as claimed in claim 1 for the preparation of a tin oxide layer consisting of particles having a mean size of about 300 nm, **characterized in that** the electrolyte is a tin chloride solution prepared from tin chloride powder.

8. The process as claimed in claim 4, for the preparation of a tin oxide layer consisting of disk-shaped pellets having a thickness of about 5 nm and a circumference of about 50 nm, **characterized in that** the electrolyte is a solution having a tin chloride concentration of 0,01 mol/l, obtained by diluting a strongly acid solution.

9. The process as claimed in claim 1, **characterized in that** :
- the insulating support on which the layer has to be deposited constitutes one of the walls of the electrochemical cell ;
- an insulating plate approximately of the same dimensions as said insulating support is parallel to said support and serves to close the cell, the gap between the support and the insulating plate defining the electrolyte volume ;
- the support and the plate are kept apart by metal contacts which allow the current to flow between the tin anode mounted inside the cell and the cathode formed by a conductive film deposited on that face of the support which is turned toward the inside of the cell and at one of the ends of said face.

10. The process as claimed in claim 1, **characterized in that** the cathode is a thin gold film having a thickness of about 1000 Å.

11. The process as claimed in claim 2, **characterized in that** an insulating support is used, wherein on surface thereof has micro scratches, for the preparation of a tin oxide layer in the form of a polycrystalline wire.

## Patentansprüche

1. Verfahren zur Herstellung des Sensorelements eines Sensors für reduzierende Gasmoleküle auf elektrochemischem Weg, **dadurch gekennzeichnet, dass**:
- in einem ersten Schritt auf der Oberfläche eines isolierenden Trägers eine Zinnschicht mit einer Dicke von weniger als 1 µm abgeschieden wird, indem der isolierende Träger in eine elektrochemische Zelle platziert wird, die eine Anode aus Zinn und eine Kathode umfasst, die in Form eines leitfähigen Films auf der Oberfläche des isolierenden Trägers an einem seiner Enden aufgetragen ist, wobei die beiden Elektroden durch einen Elektrolyten aus einer Lösung eines Zinnsalzes getrennt sind, und indem Strom mit konstanter Stromstärke durch die Zelle geleitet wird;
- in einem zweiten Schritt die erhaltene Zinnschicht einer Oxidation unterzogen wird.

2. Verfahren nach Anspruch 1, **dadurch gekennzeichnet, dass** eine solche Stromstärke zugeführt wird, dass diese eine Stromdichte zwischen 1 µA/cm² und 5 mA/cm² in jener Ebene erzeugt, die im rechten Winkel zu den Elektroden steht und durch die Wachstumsfront der sich abscheidenden Schicht verläuft.

3. Verfahren nach Anspruch 2, **dadurch gekennzeichnet, dass** die Stromdichte zwischen 0,05 mA/cm² und 5 mA/cm² beträgt.

4. Verfahren nach Anspruch 3, **dadurch gekennzeichnet, dass** die Stromdichte weniger als 1 mA/cm² beträgt.

5. Verfahren nach Anspruch 1, **dadurch gekennzeichnet, dass** die Konzentration des Zinnsalzes im Elektrolyten zwischen 10⁻³ mol/l und 10⁻¹ mol/l beträgt.

6. Verfahren nach Anspruch 5, **dadurch gekennzeichnet, dass** die Konzentration des Zinnsalzes im Elektrolyten zwischen 0,005 mol/l und 0,05 mol/l beträgt.

7. Verfahren nach Anspruch 3 zur Herstellung einer Zinnoxidschicht, die aus Körnchen mit einer mittleren Dimension in der Größenordnung von 300 nm besteht, **dadurch gekennzeichnet, dass** der Elektrolyt eine Zinnchloridlösung ist, die aus einem Zinnchlorid-Pulver hergestellt wird.

8. Verfahren nach Anspruch 4 zur Herstellung einer Zinnoxidschicht, die aus scheibenförmigen Plätzchen mit einer Dicke von etwa 5 nm und einem Umfang von etwa 50 nm besteht, **dadurch gekennzeichnet, dass** der Elektrolyt eine durch Verdünnen einer stark sauren Lösung erhaltene Zinnchloridlösung mit 0,01 mol/l ist.

9. Verfahren nach Anspruch 1, **dadurch gekennzeichnet, dass**:
- der isolierende Träger, auf dem die Schicht abzulagern ist, eine der Wände der elektrochemischen Zelle bildet;
- eine isolierende Platte, die etwa dieselben Dimensionen wie der isolierende Träger aufweist, parallel zum Träger angeordnet ist und zum Verschließen der Zelle dient, wobei der Abstand zwischen dem Träger und der isolierenden Platte das Elektrolytvolumen begrenzt;
- der Träger und die Platte durch Metallkontakte beabstandet sind, die das Fließen von Strom zwischen der im Inneren der Zelle angebrachten Zinnanode und der Kathode ermöglicht, die an einem Ende der dem Inneren der Zelle zugewandten Fläche des Trägers in Form eines leitfähigen Films ausgebildet ist.

10. Verfahren nach Anspruch 1, **dadurch gekennzeichnet, dass** die Kathode ein dünner Goldfilm mit einer Dicke von etwa 1000 Å ist.

11. Verfahren nach Anspruch 2, **dadurch gekennzeichnet, dass** der isolierende Träger, der eine Fläche besitzt, die Mikrostreifen aufweist, zur Herstellung einer Zinnoxidschicht in Form von polykristallinen Mikrofäden eingesetzt wird.
